# EUROPÄISCHE PATENTSCHRIFT

(11) **EP 1 613 237 B1**
(45) Veröffentlichungstag und Bekanntmachung des Hinweises auf die Patenterteilung: **23.02.2011**
(21) Anmeldenummer: 04725595.5
(22) Anmeldetag: 03.04.2004
(51) Int. Cl.: A61C 13/00

(54) **Rohling zur Herstellung zahnmedizinischer rekonstruktionen und Herstellungsverfahren desselben**
Blank for manufacturing dental restorations and method for making the same
Brut pour la fabrication de restaurations dentaires et procédé pour sa fabrication

(30) Priorität: 04.04.2003 CH 619032003
(43) Veröffentlichungstag der Anmeldung: 11.01.2006
(73) Patentinhaber: Xawex Ag, 8123 Ebmatingen (CH)
(72) Erfinder: BRODBECK, Urs, CH-8803 Erlenbach (CH); GUBLER, Daniel, CH-8117 Fällanden (CH)
(74) Vertreter: Patentanwälte Ruff, Wilhelm, Beier, Dauster & Partner
(86) Internationale Anmeldenummer: PCT/CH2004/000212
(87) Internationale Veröffentlichungsnummer: WO 2004/086999

(56) Entgegenhaltungen:
- WO-A-02/45614
- DE-A- 4 436 231
- FILSER F. ET AL: 'Rapid Prototyping von keramischen Bauteilen mit dem Direct Ceramic Machining - Verfahren' 6. INTERATIONALES IWF-KOLLOQIUM "FEINSTBEARBEITUNG TECHNISCHER OBERFLÄCHEN" 18 April 2002 - 19 April 2002, Seiten 29 - 41
- FILSER F. ET AL: 'All-Ceramic Dental Bridges by Direct Ceramic Machining (DCM)' MATERIALS IN MEDECINE, MATERIALS DAY, DEPART. OF MATERIALS 01 Mai 1998, ZÜRICH, Seiten 169 - 169

## Beschreibung

### Technisches Gebiet

Die vorliegende Erfindung betrifft eine Rohling gemäss Oberbegriff des Anpruchs 1. Sie betrifft ein Verfahren zur Herstellung eines Rohlings gemäß dem Oberbegriff des Anspruchs 8.

### Stand der Technik

Aus WO 99/47065 ist ein Verfahren und ein Rohling zur Herstellung von auf wenigstens einen vorpräparierten Zahnstumpf aufpassbaren künstlichen Zahnkronen und/oder Zahnbrücken bekannt geworden. Die dreidimensionale äussere und innere Oberfläche eines Positivmodells des Grundgerüstes für die Zahnkronen und/oder Zahnbrücken werden abgetastet und digitalisiert. Die ermittelten Daten werden um einen die Sinterschrumpfung exakt kompensierenden Faktor in allen Raumrichtungen linear vergrössert, in die Steuerelektronik wenigstens einer Bearbeitungsmaschine für die Bearbeitung der Rohlinge aus poröser Keramik übertragen und davon geeignete Werkzeugwege abgeleitet. Mittels Steuerbefehlen für Werkzeuge wird von der Digitalisierung zeitlich entkoppelt Material von Rohling abgetragen, bis eine vergrösserte Ausführungsform des Positivmodells vorliegt. Dieses vergrösserte Grundgerüst wird zum Grundgerüst mit direkten Endmassen gesintert. Dabei werden für die Herstellung des Rohlings Pulver oder Kolloide über bekannte Methoden der keramischen Formgebung zu grünen Rohlingen verarbeitet. Diese Druckschrift hebt des weiteren hervor, dass aus fertigungstechnischen Gründen für die Rohlinge geometrische einfache Gestaltformen, wie Zylinder oder Quader, bereitgestellt werden.

Folgerichtig baut die Lehre zum technischen Handeln aus dieser Druckschrift auf zylindrischen oder quaderförmigen Rohlingen, welche zwischen zwei Wellen drehbar eingespannt sind. Diese Rohlinge weisen aus Herstellungsgründen eine kurze Länge auf, so dass sie sich lediglich dazu eignen, jeweils nur für eine einzige Zahnrekonstruktionen bestehend aus wenigen Gliedern gut zu sein. Augenfällig ist hier des weiteren, dass die Bearbeitung an der Fläche senkrecht zur Längsachse dieser zylinder- oder quaderförmigen Rohlinge geschieht, was unweigerlich zu einer umfangreichen Abtragung des Keramik-Materials und Verschleiss der Bearbeitungswerkzeuge führt, insbesondere dann, wenn die Rohlinge von zylindrischer Form sind. Des weiteren liegt es hier auf der Hand, dass die Bearbeitung solcher Rohlinge grössere Fräszeiten benötigen. Solche gewichtige Beschränkungen mindern in erheblichem Masse die Akzeptanz dieser hier vorgeschlagenen Technik.

Ein Rohling für die Herstellung Zahnmedizinischer Rekonstruktionen gemäß dem Oberbegriff des Anspruchs 1 ist aus der WO0245615 bekannt.

### Darstellung der Erfindung

Hier will die Erfindung Abhilfe schaffen. Der Erfindung, wie sie in den Ansprüchen gekennzeichnet ist, liegt die Aufgabe zugrunde, einen Rohling und ein Verfahren vorzuschlagen, welches die obengenannten Nachteile allesamt und nachhaltig zu beheben vermag. Insbesondere geht es hier aufgabengemäss darum, ein auf einem System basierendes Verfahren vorzuschlagen, welches ein breites Spektrum von Zahnrekonstruktionen mit Keramik-Material erstmalig ermöglicht, wobei diese Rekonstruktionen durch einfachste Bedienung der zum Verfahren gehörenden Soft- und Hardware bei tiefen Gestehungskosten hergestellt werden können.

So gesehen betrifft die erste Stossrichtung der Erfindung die Bereitstellung eines für zahnmedizinischen Rekonstruktionen zu verarbeitenden Keramik-Materials, dessen Ausgestaltung gerade die zum Stand der Technik einschränkenden Möglichkeiten zu beheben vermag. Das erfindungsgemässe Keramik-Material besteht nun aus einem scheiben- oder puckförmigen Rohling, welcher seinerseits aus einem Pressling gewonnen wird, das bei vollisostatischer oder quasi-isostatischer Pressung entsteht. Das durch eine vollisostastische oder quasi-isostatische Pressung gewonnene Pressling ist von zylindrischer oder quasi-zylindrischer Form und weist eine relativ grosse Länge bei einem relativ grossen Durchmesser, vorzugsweise grösser 50 mm, auf, dergestalt, dass rechtwinklig zu seiner Achse eine grössere Anzahl scheibenförmiger Rohlinge verschiedener Dicken in parallelen Schnitttechnik abgetrennt werden können.
An sich kann der Rohling auch aus einer runden oder quasi-runden Scheibe variabler Durchmesser und Dicke oder aus einer sonstigen geometrischen Aussenform variabler Aussendimension und Dicke bestehen.

Die vollisostatische Pressung zeichnet sich dadurch aus, dass der Druck allseits, d.h. auch in Achsrichtung auf das zylindrische oder zylinderförmige Pressling ausgeübt wird, wodurch eine maximierte homogene innere Dichte des Keramikmaterials über die ganze Bearbeitungsfläche erzielt wird. Diese hochwertige Homogenität hat den Vorteil, dass der nachfolgende Endsinterprozess bei den hergestellten Zahnrekonstruktionen, unabhängig aus welchem Sektor des Rohlings sie stammen, durch eine exakte vorausbestimmbare Schrumpfung charakterisiert ist, was sich auf eine genaue Masshaltigkeit des Endproduktes niederschlägt.

Erfindungsgemäss wird des weiteren sichergestellt, dass die scheibenförmigen Rohlinge vor deren Verarbeitung zu zahnmedizinischen Rekonstruktionen entweder in einer definierten ungesinterten Form vorliegen, oder nach bestimmten Kriterien zunächst thermisch so behandelt werden, dass sie als noch nicht endgesinterte Rohlinge zur Bearbeitung gelangen. Eine homogene definierte physikalische Struktur der Rohlinge ist Voraussetzung dafür, dass die Schrumpfung beim Endsinterprozess im Zusammenhang mit den hergestellten Zahnrekonstruktionen exakt im voraus feststeht, unabhängig davon, ob dieser Endsinterprozess bis zum absoluten spezifischen Gewichts des Keramik-Materials geführt wird oder je nach Bedarf darunter bleiben soll.

Ein wesentlicher Vorteil der Erfindung ist darin zu sehen, dass die grosse Fläche der Rohlinge ohne weiteres die Unterbringung grosser zahnmedizinischer Rekonstruktionen zulässt, die bis zu 14-gliedrigen Brückengerüsten reichen, wobei die bearbeitungsmässige Unterbringung mehrerer Rekonstruktionen auf einmal möglich sind, so dass es auf der Hand liegt, dass mit solchen Rohlingen längere Fräsarbeiten ohne Materialwechsel möglich sind. Daraus ergibt sich, dass die Umrüstzeit sich jeweils auf eine Vielzahl von Rekonstruktionen verteilt, was sich auf die Herstellungskosten dieser Produkte äusserst positiv auswirkt.

Ein weiterer wesentlicher Vorteil der Erfindung ist darin zu sehen, dass sich eine weitere Minimierung der Herstellungskosten dadurch ergibt, dass der maximierte Durchmesser der Rohlinge eine bessere Ausnutzung des Materials im Bogenbereich zulässt, dergestalt, dass eine optimierte Platzierung der vorzunehmenden Bearbeitungen jederzeit möglich ist, auch im Nachgang bei einem bereits stark verarbeiteten Rohling.

Ein weiterer wesentlicher Vorteil der Erfindung ist darin zu sehen, dass je nach Rekonstruktion verschiedene Rohlingsdicken eingesetzt werden können, beispielsweise dünne Rohlinge für Kappen, dickere Rohlinge für hohe Brückengerüste.

Ein weiterer wesentlicher Vorteil der Erfindung ist darin zu sehen, dass sich durch eine Klassifizierung der Rohlinge eine exakte Voraussage über die beim Endsinterprozess zu erwartende Schrumpfung machen lässt.

Grundsätzlich ist ein wesentlicher Vorteil der Erfindung, wie oben bereits angedeutet, darin zu sehen, dass die Bearbeitung nunmehr nicht am Umfang eines zylindrischen oder quaderförmigen Rohlings geschieht, sondern an den planen Flächen des erfindungsgemässen scheibenförmigen Rohlings durchgeführt wird, womit bei den erfindungsgemässen Rohlingen kürzere Bearbeitungszeiten (Fräszeiten) resultieren, da weniger Material gegenüber den zylindrischen oder quaderförmigen Rohlinge abgetragen werden muss.

Vorteilhafte und zweckmässige Weiterbildungen der erfindungsgemässen Aufgabenlösung sind in den weiteren Ansprüchen gekennzeichnet.

Im folgenden wird anhand der Zeichnung ein Ausführungsbeispiel der Erfindung näher erläutert. Alle für das unmittelbare Verständnis der Erfindung nicht wesentlichen Elemente sind weggelassen worden. Gleiche Elemente sind in den verschiedenen Figuren mit den gleichen Bezugszeichen versehen.

### Kurze Beschreibung der Figuren

Es zeigt:
- Fig. 1: die wichtigsten Merkmale bei der Bearbeitung eines Rohlings,
- Fig. 2: die Herstellung von Zahnrekonstruktionen aus einem Rohling und
- Fig. 3: ein 3-gliedriges Brückengerüst.

### Wege zur Ausführung der Erfindung, gewerbliche Verwendbarkeit

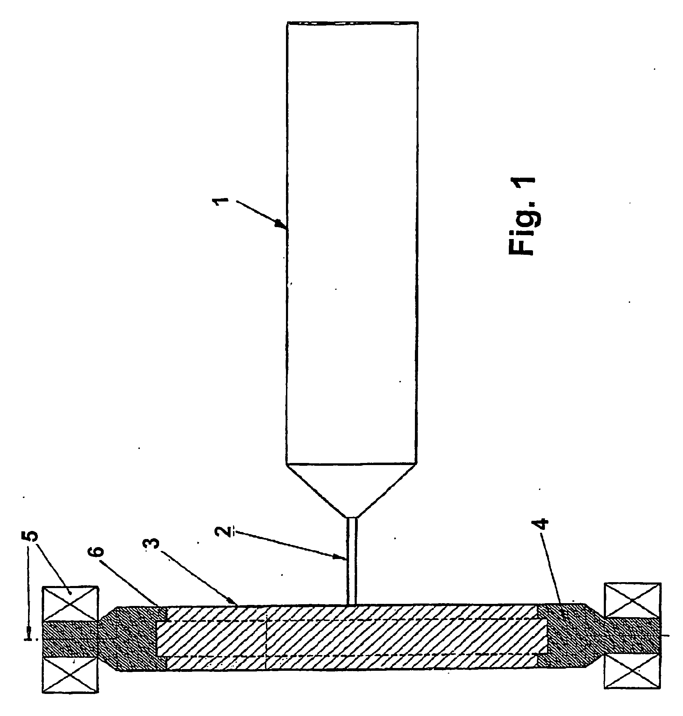

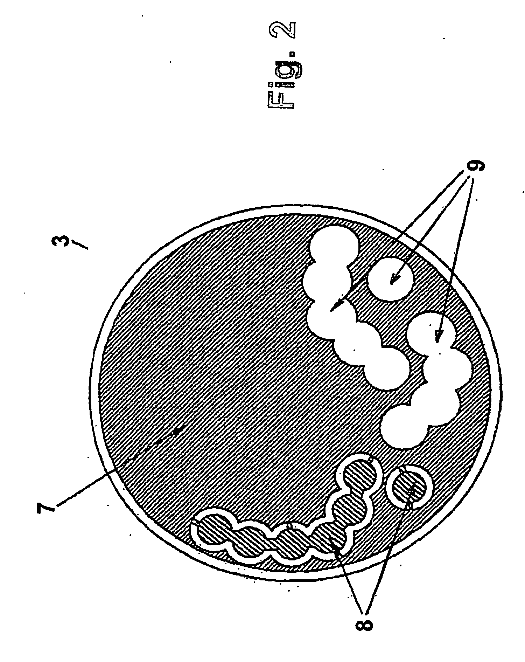

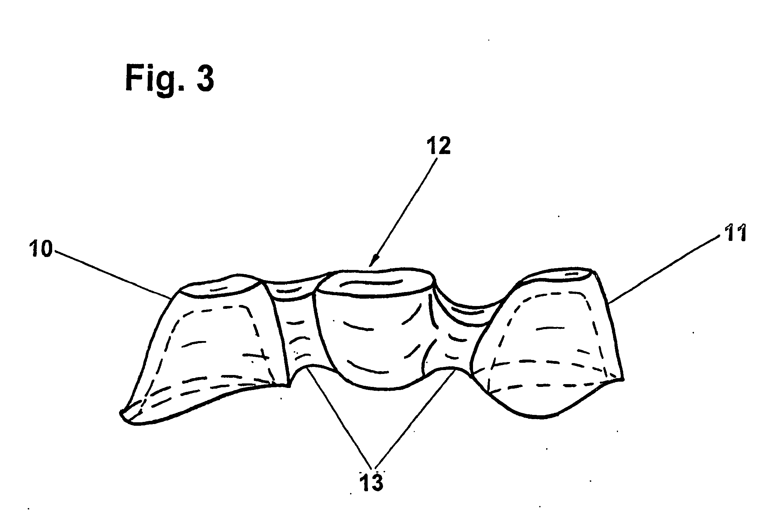

Fig. 1 zeigt die maschinentechnische Disposition bei der Bearbeitung eines Rohlings 3. Wie bereits oben mehrfach beschrieben, hat dieser Rohling 3 die Form einer Scheibe und ist innerhalb mindestens einer CAD/CAM-Bearbeitungsstation senkrecht in einer Halterungsvorrichtung 4 eingespannt, womit der Spindelmotor 1 mit dem dazugehörigen Fräser 2 die Fläche des Rohlings 3 in horizontaler Richtung bearbeitet. Der Rohling 3 ist in einer Halterungsvorrichtung 4 über die Achse 5 drehbar eingespannt, wobei der Rohling 3 in Umfangsrichtung konzentrische Eindrehungen 6 aufweist, auf welche die Halterungsvorrichtung 4 kraftschlüssig wirkt. Diese horizontale Bearbeitung des Rohlings 3 ist so ausgelegt, dass die okklusalen und kavitalen Formen der jeweiligen Zahnrekonstruktion bearbeitet wird. Hierzu werden die optimalen gesteuerten Arbeitsdispositionen vorausbestimmt und umgesetzt. Die Bearbeitung der Rohlinge kann ausser durch CAD/CAM auch durch andere spanabhebende Systeme bewerkstelligt werden. Die dieser Bearbeitung vorausgehenden Abläufe lassen sich kurz wie folgt umschreiben:
Auf das Gipsmodell wird mit einem plastischen Werkstoff das Zahnfleisch modelliert. Mit Wachs wird das Zwischenglied mit den Verbindungsstegen (Siehe hierzu Fig. 3) so modelliert, dass es einfach entfernbar ist. Bei einem Brückengerüst mit mehreren Zwischengliedem wird ähnlich verfahren. Zuerst wird das modellierte Gipsmodell mit einem Laser eingelesen, mit Software-Werkzeugen werden die Daten zugeschnitten, wobei diese Daten dann in das CAD eingelesen werden. Ausser der Eingabe von Wandstärke und Zementspalt sind keine weiteren konstruktiven Eingriffe nötig. Anschliessend werden die Haltestege platziert. Bei einem Rohling mit einem Durchmesser von ca. 100 mm können bis zu 20 Einheiten bearbeitet werden (Siehe hierzu Fig. 2). Die NC-Fräsdaten werden automatisch generiert. Selbstverständlich wird die dazu taugliche Software eingesetzt und fortlaufend einem Verbesserungsprozess unterzogen. Das ganze System lässt ohne weiteres die Implementierung von spezifischen Kundenwünschen zu. Auf die erfindungsgemässen Spezifikationen des Rohlings betreffend seine Herstellung bei vollisostatischer oder quasi-isostatischer Pressung eines Presslings sowie hinsichtlich des ungesinterten oder nicht endgesinterten Zustandes ist bereits oben unter dem Kapitel "Darstellung der Erfindung" eingehend eingegangen worden. Das durch vollisostatischer oder quasi-isostatischer Pressung hergestellte Pressling wird nach Bedarf zu einem zylindrischen Vollkörper überdreht, bevor es scheibenweise zu Rohlingen geschnitten wird. Selbstverständlich lässt sich auch eine CAD/CAM-Bearbeitungsstation vorstellen, bei welcher der Rohling horizontal angeordnet ist und der Spindelmotor dann vertikal operiert.

Fig. 2 zeigt den Rohling 3 mit seiner freien bearbeitbaren Fläche 7, worin gefräste Rekonstruktionen 8 sowie bereits rausgetrennte Brückengerüste und Kappen 9 ersichtlich sind.

Fig. 3 zeigt ein bearbeitetes 3-gliedriges Brückengerüst, bestehend aus zwei endseitigen Kappen 11, einem Zwischenglied 12 und zwei Zwischenstegen 13. Das Brückengerüst wird nach dessen Raustrennung aus dem Rohling einem Endsinterprozess zugeführt. Um hier eine optimale Prozessgenauigkeit zu gewährleisten, wird ein Hochtemperaturrohrofen eingesetzt, der aufgrund seiner reproduzierbaren hohen Genauigkeit eine optimale Wahl darstellt. Mit einer Leistung von über 4 KW und einer reproduzierbaren Genauigkeit von +/- 2°C bildet dieser Sinterofen den letzten Verfahrensschritt des Produktionsverfahrens. Die aus Zirkonoxid hergestellten Rekonstruktionen werden bei über 1500°C innert 16 Stunden verzugsfrei, auf das absolut erreichbare spezifische Gewicht von 6,075 g/mm³ gesintert. Soll das absolut erreichbare spezifische Gewicht bei den Zahnrekonstruktionen aus irgendeinem Grund nicht angestrebt werden, so wird Temperatur und Verweilzeit im Sinterofen entsprechend angepasst.

## Patentansprüche

1. Rohling für die Herstellung zahnmedizinischer Rekonstruktionen, wie Brückengerüsten, Kappen oder Implantaten, **dadurch gekennzeichnet, dass** er aus einem ungesinterten oder nicht endgesinterten Keramikmaterial besteht und die Form einer runden oder quasi-runden Scheibe mit einem Durchmesser von grösser 50 mm aufweist.

2. Rohling nach Anspruch 1, **dadurch gekennzeichnet, dass** der Durchmesser grösser 80 mm beträgt.

3. Rohling nach Anspruch 1 oder Anspruch 2, **dadurch gekennzeichnet, dass** die Dicke der Scheibe grösser 10 mm beträgt.

4. Rohling nach einem der Ansprüche 1 bis 3, **dadurch gekennzeichnet, dass** er in Umfangsrichtung Mittel (6) für seine kraftschlüssige Einspannung in einem Halterungswerkzeug (4) einer CAD/CAM-Bearbeitungsstation aufweist.

5. Rohling nach Anspruch 4, **dadurch gekennzeichnet, dass** es sich bei dem Mittel (6) um mindestens eine konzentrische Eindrehung handelt.

6. Rohling nach einem der Ansprüche 1 bis 5, **dadurch gekennzeichnet, dass** er aus einem vollisostatisch oder quasi-isostatisch gepressten Keramikmaterial besteht.

7. Rohling nach einem der Ansprüche 1 bis 6, **dadurch gekennzeichnet, dass** das Keramikmaterial aus einem Zirkonoxid besteht.

8. Verfahren zur Herstellung eines Rohlings nach einem der vorhergehenden Ansprüche, wobei aus diesem Rohling in mindestens einem spanabhebenden Vorgang auf einer Bearbeitungsstation zahnmedizinische Rekonstruktionen, wie Brücken, Kappen oder Implantate, hergestellt werden, **dadurch gekennzeichnet, dass** durch eine vollisostatische oder quasi-isostatische Pressung eines Keramik-Materials ein zylindrischer oder quasi-zylindrischer Pressling geformt wird, und dass aus dem so gefertigten Pressling rechtwinklig zu seiner Achse eine Vielzahl scheibenförmiger Rohlinge (3) verschiedener Dicken abgeschnitten werden.

9. Verfahren nach Anspruch 8, **dadurch gekennzeichnet, dass** der äußere Umfang des Presslings zylindrisch überdreht wird.

10. Verfahren nach Anspruch 8 oder Anspruch 9, **dadurch gekennzeichnet, dass** bei vollisostatischer Pressung Rohlinge (3) mit mindestens 80 mm Durchmesser hergestellt werden.

11. Verfahren nach einem der Ansprüche 8 bis 10, **dadurch gekennzeichnet, dass** der Rohling (3) eine Dicke von grösser 10 mm aufweist.

12. Verfahren nach einem der Ansprüche 8 bis 11, **dadurch gekennzeichnet, dass** das Keramik-Material aus einem Zirkonoxid besteht.

13. Verfahren nach einem der Ansprüche 8 bis 12, **dadurch gekennzeichnet, dass** der Rohling (3) bei zylindrischer Form in Umfangsrichtung eine konzentrische Eindrehung erhält.

## Claims

1. Blank for the production of dental reconstructions, such as bridge frameworks, caps or implants, **characterized in that** it consists of a ceramic material that is unsintered or has not been subjected to final sintering and has the form of a circular or quasi-circular disk with a diameter of greater than 50 mm.

2. Blank according to Claim 1, **characterized in that** the diameter is greater than 80 mm.

3. Blank according to Claim 1 or Claim 2, **characterized in that** the thickness of the disk is greater than 10 mm.

4. Blank according to one of Claims 1 to 3, **characterized in that**, in the circumferential direction, it has means (6) for clamping it with a force fit in a retaining tool (4) of a CAD/CAM processing station.

5. Blank according to Claim 4, **characterized in that** the means (6) is at least one concentric groove.

6. Blank according to one of Claims 1 to 5, **characterized in that** it is made of a fully isostatically or quasi-isostatically pressed ceramic material.

7. Blank according to one of Claims 1 to 6, **characterized in that** the ceramic material is made of a zirconium oxide.

8. Method for producing a blank according to one of the preceding claims, dental reconstructions, such as bridges, caps or implants, being produced from this blank in at least one procedure that cuts away material on a processing station, **characterized in that** a cylindrical or quasi-cylindrical pressed article is formed by a fully isostatic or quasi-isostatic pressing of a ceramic material, and **in that** a multiplicity of disk-shaped blanks (3) of different thicknesses are cut from the thus produced pressed article at right angles to its axis.

9. Method according to Claim 8, **characterized in that** the outer circumference of the pressed article is cylindrically turned.

10. Method according to Claim 8 or Claim 9, **characterized in that**, with fully isostatic pressing, blanks (3) with a diameter of at least 80 mm are produced.

11. Method according to one of Claims 8 to 10, **characterized in that** the blank (3) has a thickness of greater than 10 mm.

12. Method according to one of Claims 8 to 11, **characterized in that** the ceramic material consists of a zirconium oxide.

13. Method according to one of Claims 8 to 12, **characterized in that** the blank (3), in the case of a cylindrical shape, obtains a concentric groove in the circumferential direction.

## Revendications

1. Brut pour la fabrication de reconstructions dentaires, comme des structures de bridges, des couronnes ou des implants, **caractérisé en ce qu'**il se compose d'un matériau céramique non fritté ou non entièrement fritté et présente la forme d'un disque rond ou quasiment rond présentant un diamètre supérieur à 50 mm.

2. Brut selon la revendication 1, **caractérisé en ce que** le diamètre est supérieur à 80 mm.

3. Brut selon la revendication 1 ou la revendication 2, **caractérisé en ce que** l'épaisseur du disque est supérieure à 10 mm.

4. Brut selon l'une quelconque des revendications 1 à 3, **caractérisé en ce qu'**il présente, en direction périphérique, des moyens (6) pour son serrage par force dans un outil de maintien (4) d'un poste d'usinage CAO/FAO.

5. Brut selon la revendication 4, **caractérisé en ce que** les moyens (6) comprennent au moins une portée tournée concentrique.

6. Brut selon l'une quelconque des revendications 1 à 5, **caractérisé en ce qu'**il se compose d'un matériau céramique compacté de manière entièrement isostatique ou quasiment isostatique.

7. Brut selon l'une quelconque des revendications 1 à 6, **caractérisé en ce que** le matériau céramique se compose d'un oxyde de zirconium.

8. Procédé pour la fabrication d'un brut selon l'une quelconque des revendications précédentes, dans lequel on fabrique à partir de ce brut, en au moins une opération d'usinage par enlèvement de copeaux dans un poste d'usinage, des reconstructions dentaires comme des bridges, des couronnes ou des implants, **caractérisé en ce que** l'on forme une ébauche cylindrique ou quasiment cylindrique comprimée par un compactage entièrement isostatique ou quasiment isostatique d'un matériau céramique, et **en ce que** l'on découpe à partir de l'ébauche comprimée ainsi fabriquée, perpendiculairement à son axe, une multiplicité de bruts en forme de disque (3) de différentes épaisseurs.

9. Procédé selon la revendication 8, **caractérisé en ce que** l'on tourne à la forme cylindrique la périphérie extérieure de l'ébauche comprimée.

10. Procédé selon la revendication 8 ou la revendication 9, **caractérisé en ce que** l'on fabrique, par compactage entièrement isostatique, des bruts (3) présentant un diamètre d'au moins 80 mm.

11. Procédé selon l'une quelconque des revendications 8 à 10, **caractérisé en ce que** le brut (3) présente une épaisseur supérieure à 10 mm.

12. Procédé selon l'une quelconque des revendications 8 à 11, **caractérisé en ce que** le matériau céramique se compose d'un oxyde de zirconium.

13. Procédé selon l'une quelconque des revendications 8 à 12, **caractérisé en ce que** le brut (3) reçoit une portée tournée concentrique pour une forme cylindrique en direction périphérique.
